# EUROPEAN PATENT SPECIFICATION

(11) **EP 0 409 606 B1**
(45) Date of publication and mention of the grant of the patent: **24.09.1997**
(21) Application number: 90307876.4
(22) Date of filing: 19.07.1990
(51) Int. Cl.: G01N 35/02

(54) **Automatic immunoassay analyzer**
Automatisches Analysiergerät
Analyseur automatique d'essais immunologiques

(30) Priority: 19.07.1989 JP 186637/89
(43) Date of publication of application: 23.01.1991
(73) Proprietor: Tosoh Corporation, Shinnanyo-shi, Yamaguchi-ken, 746 (JP)
(72) Inventor: Kagayama, Toshi, Yokohama-shi, Kanagawa-ken (JP); Iwasaki, Shuji, Fujisawa-shi, Kanagawa-ken (JP)
(74) Representative: Kearney, Kevin David Nicholas

(56) References cited:
- EP-A- 0 212 663
- EP-A- 0 314 525
- BE-A- 674 288
- US-A- 3 854 879
- US-A- 4 168 775
- US-A- 4 315 891
- CLINICAL CHEMISTRY. vol. 34, no. 9, September 1988, WINSTON US pages 1726 - 1732; M. FIORE ET AL: "The Abbott IMx automated benchtop immunochemistry analyzer system"

## Description

### Background of the Invention:

### Field of the Invention:

This invention relates to an automatic immunoassay analyzer. More particularly, the present invention relates to an immunoassay analyzer capable of measuring automatically and continuously at least one measurement (clinical testing) analyte for each of a plurality of specimens (the specimens as the objects of measurement) and more in particular, to a multiple immunoassay analyzer having a random access function which can freely select the random measurement analytes for each specimen.

### Description of the Related Art:

Various immunological clinical testing methods have been developed in the past. An example of such methods is described in "KOUSO MENEKI SOKUTEIHOU" (3rd edition) published by Igaku Shoin and "PRACTICE and THEORY of ENZYME IMMUNOASSAY", P. Tijssen, ELSEIER, AMSTERDAM, NEW YORK, OXFORD, and various methods are selected in accordance with the specimens of measurement and with the objects of measurement. Recently, a heterogeneous system has gained a wide application for achieving a high sensitivity measurement.

A method of measuring the quantity of an antigen contained in specimens such as the blood collected as a specimen from a patient will be explained on the basis of a one-step sandwich method by way of example. In accordance with this method, the specimen as the object of measurement is added into a reaction vessel into which an antibody coupled to an insoluble support (solid phase) such as the inner wall of a synthetic resin vessel or particles (hereinafter referred to as the "immobilized antibody") and an antibody labeled by a label material such as a radioactive material, a fluorescent material, an enzyme, or the like (hereinafter referred to as the "labeled antibody") are in advance packed (so called sandwich). In the reaction vessel, the antigen contained in the specimen causes the antigen-antibody reaction with the immobilized antibody and the labeled antibody to form an antigen-antibody composite member and at the same time, the labeled antibody couples with this antigen-antibody composite member, thereby forming a composite member wherein the three components, that is, the immobilized antibody - antigen - labeled antibody, are sandwiched.

In this manner the labeled antibody is coupled with the solid phase with the antigen in the specimen being the medium.

Next, the excessive labeled antibody which does not couple with the antigen added into the reaction vessel and the antibody components which do not participate in the immunological reaction other than the label coupled with this solid phase are subjected to isolation (hereinafter referred to as "B/F isolation"). Finally, the label quantity proportional to the antigen quantity coupled with the solid phase is measured quantitatively by physical or chemical means utilizing the properties of the label in order to determine the antigen concentration in the specimen.

In contrast, a two-step sandwich method carries out the first reaction by adding the specimen to the reaction vessel into which only the immobilized antibody is in advance charged, and then adds the labeled antibody to cause the second reaction.

In other words, the specimen is first added to the reaction vessel into which the immobilized antibody (or a reagent containing the same) is in advance charged. Thus, a specific antigen in the specimen causes the antigen - antibody reaction with the immobilized antibody and is coupled and fixed to the solid phase. The unreacted components which do not cause the antigen - antibody reaction are discharged outside the vessel through B/F isolation. Next, the labeled antibody is added to the reaction vessel so as to cause the antigen - antibody reaction. In this manner, the composite member of the immobilized antibody - antigen - labeled antibody is formed. The unreacted components and the reaction residue are subjected to B/F isolation and discharged outside the vessel.

After this operation, the amount of the composite coupled with the solid phase is measured by quantitative determination of the label material in the same way as in the one-step system described above so as to determine the antigen concentration in the specimen.

Besides these sandwich methods described above, a so-called "competitive method" is also known. This method causes the competitive reaction between the antigen in the specimen and the antigen labeled in advance by the label material (generally referred to as the "labeled antigen") at the same combined site of the immobilized antibody described above.

In accordance with this competitive method, the antigen in the specimen is reacted with the immobilized antibody and also the labeled antigen contained in the reagent is reacted with the immobilized antibody. Accordingly, the component (antigen) in the specimen as the object of measurement and the labeled antigen react competitively with the antigen - antibody reaction portion of the combined site of the immobilized antibody. As a result, the immunological composite members are formed respectively on the basis of the quantity ratio (concentration ratio) between the antigen component which is contained in the specimen and whose quantity is not known and the labeled antigen component whose quantity is in advance given. In this manner the antigen quantity in the specimen can be determined in accordance with the calculation proportional to the ratio described above by effecting the quantitative measurement of the quantity of the label material immobilized to the solid phase by utilizing the properties of the label material after B/F isolation of the unreacted materials and the reaction residue in the same way as the sandwich method.

As described above, the method of measuring quantitatively the quantity of the label material (which is sometimes referred to as a "marker") immobilized and coupled to the solid phase varies with the properties of the label material and according to the classification based on such an aspect, the immunoassay method is often referred to as FIA when a chemical fluorescent material is used for labeling, RIA when a radio-active material is used and EIA when an enzyme is used.

Detection and quantitative determination of trace amounts of living body materials and physiologically active substances by utilizing such immunological means are useful for diagnosis of various diseases and for the preparation of a remedial plan. For accurate diagnosis, the utilization of the analysis result of a plurality of different analyte is mostly effective and reagents and the like have conventionally been developed for measuring various living body components for the diagnosis of various diseases.

The immunological reaction measurement method used for the measurement of the physiologically active substances and the like utilizes in various manners the immunological reaction and the properties of the label material for measuring the antigen quantity either chemically or physically are also diversified. Accordingly, those apparatuses which have conventionally been developed for the measurement, particularly automated apparatuses having high industrial values, combine suitable methods and mechanisms in consideration of the measurement method of the immunological reaction and the problems peculiar to the properties of the label material, and a definite apparatus construction has been devised by further taking into consideration the feasibility of the apparatus when it is used in practice and the cost of the apparatus, equipment, operation, and the like. Recently, the development of a reagent kit for clinical diagnosis and apparatuses has drawn an increasing attention and various attempts have also been made.

However, most of the apparatuses that have conventionally been provided for these purposes do not sufficiently take into consideration the fact that the measurement operations are complicated because they need a large number of reagents such as peculiar immunological reagents, reaction reagents, reference specimens, and so forth, for the object material of measurement. For example, those apparatuses which have a large number of process steps which depend on the manual operation of an testing operator are not suitable for processing large quantities testing number.

Since the results of measurements are used directly as data for the diagnosis and foundation of the corresponding remedy, and since the remedial method varies with the measurements, an extremely high level of detection accuracy is required even though the apparatuses can deal with the measurement and quantitative determination of trace amounts of components, because the number of specimens requiring the testing operation described above which needs complicated and very careful attention and skill tends to increase drastically in recent years but it is very difficult to maintain and secure a large number of skilled testing operators to meet with such large number of inspection. Accordingly, the mistakes in inspection and accuracy management have become the critical problem.

For the reasons described above, the development of the apparatus which can eliminate as much as possible the errors and mistakes resulting from the individual difference of testing operators has been desired and the development of the automated apparatus which can rapidly process large quantities of testing number has also been desired.

As one of the automated immunological reaction measurement apparatuses for processing a large number of specimens in large quantities within a short period, an apparatus which processes batch-wise the measurement analyte common to a large number of specimens has been proposed in the past.

However, this batch processing system makes collective processing of only specific analyte of measurement for a large number of specimens. Therefore, the number of measurement analytes is limited from the number of apparatuses, and the like. Though this system is effective when only a predetermined and constant analyte is tested, it is not suitable for the application wherein the measurement analytes are variously changed or selected. Furthermore, the system involves another problem that once the test for one analyte is started, the next inspection cannot be made till the end of the former. Moreover, the system is susceptible to the limitation of the operation because the specimens having the same measurement analyte must be gathered in order to improve efficiency of the collective processing of the single measurement analyte. For example, a large number of specimens gathered from various medical institutions and the like must be gathered and compiled one again in accordance with each measurement analyte, so that this compilation operation invites the drop of overall efficiency and induces the mistakes in the operation.

As an apparatus for solving such problems, a random access system apparatus having the following construction has been proposed (in Japanese Patent Laid-Open No. 148885/1987). Namely, a plurality of desired measurement analytes for each specimen are inputted and registered to an electronic control apparatus (a so-called "computer") and on the other hand, reaction vessels into each of which a reagent corresponding to each of these measurement analytes is in advance charged is selected. The reaction vessels are then placed in the sequence of the measurement analytes for each specimen on a tray (test plate) having m x n arranged openings, for example, and this tray is then fed into a measurement apparatus so as to carry out the measurement operation in accordance with the registered sequence described above.

This apparatus is advantageous because it can solve the problem of the conventional batch processing system in that the specimen aggregate must be formed in accordance with each measurement analyte.

However, the apparatus of the random access processing system requires the input and registration operation of the measurement analytes of each specimen by use of an input device such as a keyboard. In other words, though the apparatus can automate the operations after the start of measurement themselves, a great deal of burden are yet left in the manual operation before the start. Since the reaction vessels must be aligned on the tray in accordance with the registered sequence by use of the mechanized device, efficiency of the operation must yet be improved. Furthermore, the apparatus is likely to be expensive and the burden on equipment is great.

US-A-3 854 879 reveals an automatic analyser comprising 2 endless transfer loops, one for sample holding vessels, the other for vessels into which sample aliquots are dispersed for testing.
The number of different reagents used is restricted to the size of the reagent dispensing block over the sample aliquot loop.

### Summary of the Invention:

The present invention provides a novel apparatus which can solve the problems confronted by the various conventional apparatus described above, can cope easily with a large number of specimens even when their measurement analytes are different in various ways, can measure the analytes easily and rapidly and is suitable for a random access system.

It is another object of the present invention to provide a novel apparatus which can cope easily either with an apparatus having a relatively small number of specimens to be processed or with an apparatus having a considerably large number of specimens by the design change of conveyors while keeping the fundamental structure of the apparatus in common, and has high design freedom.

It is still another object of the present invention to provide a novel apparatus which can easily add the specimens even after the start of the measurement operation by the apparatus.

It is still another object of the present invention to provide a novel apparatus which can finish the manual work necessary for the measurement by merely aligning specimen vessels into which the specimens are charged and reaction vessels whose contents vary with the measurement analytes for carrying out the immunological reaction on respective conveyors and is therefore extremely easy to operate and is free from the mistake in the operation.

In order to accomplish the various objects described above, the inventors of the present invention have put specific importance on the mutual association between the specimen vessels and the reaction vessels, and have completed the present invention on the basis of the novel concept, which cannot be found in the conventional apparatuses, in that these specimen vessels and reaction vessels are aligned on two conveyors in association with one another.

According to the present invention apparatus for automatic analysis of a plurality of specimens by reaction with one or more other materials, at least some of which specimens have a number of measurement analytes (properties requiring different reactions for analysis) comprising a first or specimen vessel transfer conveyor arranged as a closed loop and provided with a plurality of specimen vessel support positions and drive means for the said first conveyor, the closed loop passing from a specimen vessel loading zone or first set stage to a specimen sampling and transfer zone or suction stage and back to the first set stage; a second or reaction vessel transfer conveyor arranged as a closed loop and provided with a plurality of reaction vessel support positions and drive means for the said second conveyor, the closed loop passing from a reaction vessel loading zone or second stage to a specimen transfer zone or division-pouring stage in which zone means are provided for withdrawing one or more samples from a specimen vessel and transferring them separately to each of a corresponding number of one or more reaction vessels the conveyor closed loop then passing to a reaction measurement zone and then back to the second set stage, characterised in that adjacent specimen vessel support positions and adjacent reaction vessel support positions are separated by the same distance and the specimen vessels are spaced from each other by 'n-1' support positions where 'n' is the number of measurement analytes for the specimen in question, the specimen being placed downstream of the n-1 empty positions and n reaction vessels are provided in the second conveyor, the conveyors being arranged so that the support positions in the two conveyors move in sequence with each other and are placed in proximity with each other in the specimen transfer zone, and in that one or both of the conveyors is provided with means for enabling it to adopt a non-linear configuration or zigzag path whereby the conveyor can be halted at one position but continue to be moved upstream thereof, and in that each conveyor is provided with means for causing it to move step by step, each step being the movement between adjacent support positions and the step by step movement being continuous or intermittent.

The reason why the present invention employs the structure wherein the specimen vessels are supported skippingly by the openings disposed on the first conveyor and the reaction vessels are continuously supported by the openings aligned on the second conveyor without any gap by use of these two conveyors described above in order to carry out the immunoassay operation is as follows.

Generally a plurality of measurement analytes selected in accordance with requirements are designated for the specimen added into the predetermined specimen vessel for mutually different diagnosis. Mostly, the content of the measurement analyte itself and the number of analyte vary from specimen to specimen. In such a case, the opening zone corresponding to the number of measurement analytes (e.g. A, B, C) of the first specimen is determined in the first conveyor (specimen vessel transfer conveyor) by counting the openings of the conveyor stopped at the first set stage from the leading opening to the third opening and stipulated as the zone for the first specimen (the first zone) and the corresponding first specimen vessel is fitted into the leading opening. Next, the openings in the number corresponding to the number of measurement analytes of the second specimen are counted from the next opening (the fourth opening from the leading opening of the first set stage) and are stipulated as the second opening zone. The corresponding second specimen is fitted into the leading opening of this zone. Similarly, the third specimen vessel is fitted into the leading opening of the third opening zone, the fourth specimen vessel is fitted into the leading opening of the fourth zone, and so forth. In this manner, the vessels are set to the first conveyor.

In the second conveyor (the reaction vessel transfer conveyor), on the other hand, the reaction vessels corresponding to the measurement analytes (e.g. A, B and C described above) of the first specimen are fitted one by one into the openings from the leading opening of the conveyor which is stopped at the second set stage. For example, the reaction vessel A to which a specific reagent for the immunological measurement of A is charged is fitted into the leading (first) opening, and the reaction vessels B and C are fitted to the second and third openings, respectively. Then, the reaction vessels corresponding to the measurement analytes designated for the second specimen are sequentially fitted into the subsequent openings (from the fourth opening counted from the leading opening of the second set stage), and similarly, the reaction vessels are sequentially fitted for the third specimen and so forth.

According to this arrangement, the fitting work of the vessels into the openings of these two conveyors can be made easily. In other words, only one corresponding specimen vessel is supported in the opening zone zoned by the number of measurement analytes of each specimen on the first conveyor. Therefore, if the corresponding reaction vessels are fitted into the openings on the second conveyor having similar openings in registration with the specimen vessel fitting openings of the first conveyor and the subsequent empty openings (into which the vessels are not fitted), the position relationship between one specimen and the corresponding reaction vessels (generally, plural vessels) does not collapse for each specimen but can be always maintained as such.

If the first and second conveyors are rotated synchronously while keeping the position relationship between the specimen vessels and the reaction vessels as described above and if the timing at which the specimen vessels are stopped at the suction stage in the first conveyor and the timing at which the reaction vessels are stopped at the division-pouring stage in the second conveyor are controlled, division pouring can be effected suitably by use of a simple division-pouring mechanism, and additional fitting of the specimen and reaction vessels at the set stages can be made freely. Thus, random measurement for each specimen and the addition of the specimen as the objects of the present invention can be accomplished easily and reliably.

In a preferred embodiment of the set stage where each of the vessels described above is fitted, the reference position of the leading opening is determined in each of the first and second set stages, and display plates of the opening numbers are disposed along each conveyor towards the upstream side of the transfer path from this reference position so that the display numbers are put to the openings such as Nos. 1, 2, 3, 4, and so forth from the opening at the reference position. This arrangement provides the advantage in that when the specimen vessels are fitted into the skipping openings in the first conveyor, it becomes possible to recognize easily and visually that the opening next to the opening having the last display number into which the reaction vessel of the second conveyor is fitted is the opening into which the next specimen vessel is to be fitted. For example, if the display number of the last reaction vessel fitted into the opening of the second conveyor in such a manner as to correspond to the second specimen is No. 10, the opening in the first conveyor into which the third specimen vessel is to be fitted can be easily confirmed to be the opening No. 11.

It is also possible to dispose additionally lamp means such as LEDs to the display plate of the opening No. disposed along each conveyor so that the opening No. into which the next specimen vessel is to be fitted is turned ON by utilizing the signal from input means for inputting the number of measurement analytes which will be described elsewhere.

If the vessels fitted into the openings of the two conveyors are fed out from the respective set stages having the structure described above by driving the conveyors in synchronism with each other, the vessels can further be added reliably to the conveyors without inviting any mistakes of operation.

The automatic immunoassay analyzer of the present invention explained typically by the construction described above can exhibit further excellent effects by employing the structure wherein two conveyors having a large number of vessel support portions with mutually equal gaps are juxtaposed with each other at the first and second set stages that are juxtaposed with each other, too. According to this arrangement, both of the specimen and reaction vessels have the juxtaposition relationship when the specimen vessels and the reaction vessels are supported by the first and second conveyors, respectively, and the operator can confirm them more reliably and more easily.

The two conveyors in the present invention, preferably endless chain type conveyors, are capable of zigzag motion inside a horizontal plane so as to minimize the space occupied by the apparatus. Particularly the use of the conveyor capable of zigzag motion for the first conveyor is recommended when the first conveyor is fed out from the set stage in synchronism with the second conveyor. In other words, the first conveyor in the present invention must be kept stopped at the suction stage for the period of division-pouring of the specimen into a plurality of reaction vessels. In this case, the first conveyor can be kept staying in the zigzag form at a suitable position of the transfer path by utilizing its property of being capable of zigzag motion. For, the zigzag stage described above can mechanically absorb the time deviation between the intermittent feed operation of the conveyor from the set stage with a time interval "t" for each period and the holding operation of the specimen vessel at the suction stage for the period "n" x "t".

As a mechanism for stopping and holding the specimen vessel supported by the first conveyor at the suction stage for the period "n" x "t", it is possible to use, for example, a mechanism which stops the sprocket disposed on the suction stage among those which are disposed for the rotation of the conveyor for the period (n x t) corresponding to the number of measurement analytes designated for the specimen. In this case, the sprocket kept at the portion of the suction stage until the next specimen vessel is transferred into the suction stage must be rotated continuously in such a manner as to apply the feed of n times corresponding to the rest at the timing bf the intermittent driving of the second conveyor for transferring and stopping the next reaction vessel to and at the division-pouring stage after the passage of this period (n x t). The stays for the zigzag stay of the first conveyor are preferably disposed upstream and downstream of the suction stage of the first conveyor lest any problem occurs in the movement of the conveyor due to the motion of the sprocket described above.

The mechanism for stopping and holding the specimen vessel at the suction stage for the predetermined period in the present invention is not particularly limited to the mechanism described above, but other systems can be employed, too. For example, it is possible to employ the mechanism wherein the specimen vessel transferred to the suction stage is taken down from the conveyor and the conveyor passing through the suction stage is rotated intermittently in the same way as at other portions. After suction is complete, the specimen vessel may be discharged outside the apparatus by exclusion means because its function is already complete, or may be returned to the empty opening of the conveyor. If this arrangement is employed, it is not particularly necessary to make stop-holding control of the conveyor at the suction stage and either to dispose the zigzag stay portion. As an example for taking down the specimen vessel from the conveyor, it is possible to use a mechanism, for example, wherein the opening of the conveyor is formed in a sidewardly open shape and a reciprocating plunger is operated in the interlocking arrangement so as to push out the vessel sidewardly at this suction stage.

In the present invention, the number of measurement analytes designated individually for each specimen must be utilized as the control information in the control mechanism for stopping the rotation of the sprocket at the suction stage and for causing the continuous rotation after the stop or in the mechanism for taking down the specimen vessel from the conveyor, in order to stop the specimen vessels transferred by the first conveyor at the suction stage for the period corresponding to the number "n" of the measurement analytes. Such control information can be inputted to the apparatus by various methods.

For example, it is possible to employ the system which disposes an input ten-key (input means for inputting the number of analytes) and inputs the number of the measurement analytes when the specimen is supported onto the first conveyor and a system which disposes optical counter means for counting the specimen vessels and the number of subsequent openings, downstream of the set stage of the first conveyor. In the latter system using the counter means using the counter, it is most appropriate if the specimen vessel is supported by the leading opening of each zone in order to count the number of openings inside each opening zone determined on the first conveyor and in this case, control of suction, division-pouring, etc. becomes easy, too.

Besides the construction described above, the following construction is preferably added in the present invention.

One of such structures is the one wherein information relating to the name of a medical institution or personal information of the specimen (name, measurement analytes) is in advance put to the specimen vessel or is recorded magnetically, and is read by first read means disposed at an intermediate portion of the transfer path of the conveyor (preferably, upstream of the suction stage). A definite example of the display of the specimen vessel and the read means includes the combination of a character display with an optical reader, the combination of a bar code printout with a bar code reader or the combination of a magnetic recording medium with a magnetic reader. Those displays to the vessels which are recorded at the time of specimen collection in a hospital are preferably made available.

Besides the utilization described above, the specimen information read by the first read means can be inputted to an electronic controller such as a microprocessor and can be utilized for the display of the measurement result at the post-stage, and can also be utilized in order to confirm that any testing mistake does not occur by comparing the measurement analytes, which are read information of the second read means and are actually measured values, with a comparison program in the electronic controller described above, for example.

Another preferred additional construction of the present invention is the structure wherein necessary information such as the measurement analytes is in advance displayed on the reaction vessel or is magnetically recorded and is read by the second read means disposed at an intermediate portion of the transfer path of the conveyor (preferably upstream of the division-pouring stage). The same definite structure as that of the first read means described above can be used as the combination of the displays on the specimen vessels with the read means. The information on the measurement analytes that is read by the second read means is inputted to the electronic controller such as the microprocessor and is used for the display of the measurement result in the same way as in the first read means, or can be used for comparison and collation with the measurement analytes designated for the specimen vessel and read by the first read means. Furthermore, the read information relating to the measurement analytes and displayed on the reaction vessel can be utilized effectively for selecting operation modes of various mechanisms at the reaction-measurement stage (such as a reagent division-pouring mechanism, a substrate division-pouring mechanism, etc.) when the reagents used in these mechanisms are different.

In the present invention, the known immunoassay method can be as such used fundamentally as the operation which is carried out when the second conveyor passes by the reaction-measurement stage, and various improvements can of course be applied in order to operate more effectively the mechanism of the present invention. One-step or two-step sandwich method using the enzyme label is preferably used as the immunological reaction measurement system, though it is not particularly limitative.

The structure of the typical reaction-measurement stage of the present analyzer employing such a sandwich method will be explained briefly. An example of the analyzer of the one-step system is equipped with the following mechanisms downstream of the division-pouring stage for dividedly pouring the same into each reaction vessel:
(1) a diluted solution division-pouring mechanism for dividedly pouring a specimen diluted solution into the reaction vessel;
(2) a temperature control mechanism for effecting the immunological reaction (incubation, stirring) in the reaction vessel;
(3) a B/F isolation mechanism for isolating the reacted components and the unreacted components; and
(4) a measuring instrument for measuring the optical power of the solution in the reaction vessel.
Incidentally, the division-pouring mechanism of the division-pouring stage can be used also as the diluted solution division-pouring mechanism.

In the case of so-called EIA using the enzyme as the label in the apparatus having the construction described above, a substrate division-pouring mechanism is used at a pre-stage of the optical measuring instrument (4).

The operation of the automatic enzyme immunoassay analyzer of the present invention will be explained step-wise about the case where the analyzer has the construction described above and the reaction and measurement are carried out by the one-step system, by way of example.

At the first step, each reaction vessel into which the fixed antibody and the labeled by the enzyme are in advance charged is conveyed and transferred to the division-pouring stage by the second conveyor. On the other hand, the corresponding specimen vessel is transferred to the suction stage (or is kept continuously stopped at the suction stage from the division-pouring stage for the previous reaction vessel), and suction of the specimen from the specimen vessel and division-pouring of the sucked specimen into the reaction vessel, and if necessary, division-pouring of the diluted solution, are carried out by a movable pipet device as the division-pouring means, for example. In this manner, the composite member of the fixed antibody - antigen - labeled antibody is formed inside the reaction vessel.

Next, at the second step, other excessive reagents and the specimen are subjected to B/F isolation while leaving the composite member described above in the reaction vessel, and the substrate solution of the label enzyme is dividedly charged into the reaction vessel at the third step.

At the fourth step, the change of the substrate generated by the enzyme activity (e.g. the change of coloring of the colorless substrate due to decomposition) is measured by the optical measuring instrument and the result of measurement is recorded in the recording unit such as the electronic controller. The result of measurement is also printed out by a suitable printer, or the like, and the measurement is thus complete. The operations described above are effected repeatedly for each specimen and for each measurement analyte.

As can be understood from the explanation given above, the analyzer of the present invention can automatically carry out all the operations other than the operation of supporting manually the specimen vessels on one of the conveyors in the intervals designated by the number of measurement analytes and the operation of supporting manually the reaction vessels on the other conveyor, by the mechanized devices. Moreover, since the various devices necessary for the immunoassay are disposed at the intermediate portions of the transfer path for rotating intermittently the two conveyors so that the operations for the stopped vessels can be made by the mechanical devices, each mechanism can be constituted easily as an independent mechanism.

Accordingly, the basic construction of the analyzer explained in the typical sequence of processing steps described above can have extremely high design freedom in that the analyzer can be changed in design and for the objects of use in various ways without changing the construction that the two conveyors are rotated. To change the analyzer to the two-step system, for example, the second B/F isolation mechanism can be disposed easily and the mechanism for dividedly charging the labeled antibody, and the analyzer having the mechanism for such a two-step system, it is possible to operate the analyzer as the one-step system by stopping the corresponding mechanism.

The intermittent feed timing of the conveyors in the analyzer in the present invention may be determined with the necessary time of the mechanism having the longest operation time, among the various mechanisms disposed along the transfer path, being the reference.

The transfer path can be constituted by combining, for example, a flat plane on which the conveyors such as the endless chain conveyors are disposed and which provides the rotating surface for them, sprockets for rotating the conveyors, rotation belts, cam mechanisms, and other driving mechanisms. Suitable temperature control units are preferably disposed along the transfer path in order to keep a suitable temperature for the immunological reaction and the enzyme reaction in the transfer mechanism.

Various kinds of reaction vessels are prepared as the reaction vessels used in the present invention. The solid phases to which the antibody or the antigen is fixed are packed into the vessels and different object substances (physiologically active substances, etc.) in the specimen as the object of measurement are packed into different reaction vessels. In the case of the one-step system, the reaction vessel into which the labeled antibody is also packed in advance is also prepared. Furthermore, the opening of each reaction vessel is preferably sealed by an aluminum foil, for example, lest foreign matters mix during normal storage, and printing of the codes of the measurement analyte names onto this sealing foil is recommended as a preferred embodiment of the invention.

When such a reaction vessel of the foil seal type is used, a seal break mechanism is preferably disposed upstream of the division-pouring stage of the second conveyor and a known mechanism can be used as such a seal break mechanism.

The specimen division-pouring means described above is not particularly limitative. Generally, a typical example of such means is a movable pipet device which sucks the specimen from the specimen vessel transferred and stopped to and at the suction stage and then moves to the division-pouring stage so as to charge dividedly the sucked specimen into the reaction vessel. The movement of the pipet device may be either parallel motion or rocking, and an elevation mechanism capable of lowering into the vessel is preferably disposed, whenever necessary. It is further preferred to dispose a pipet washing well, a diluted solution port, and the like, in the moving path of this pipet device and to connect a solution supply device for supplying the diluted solution, the washing solution, etc., to this pipet device.

The incubator mechanism (2) for effecting the immunological reaction (temperature control, stirring) explained about the typical analyzer described above is appropriately disposed as part of the conveyor transfer path downstream of the division-pouring stage. This incubation mechanism can be constituted fundamentally by disposing the transfer path having a incubator mechanism and a predetermined length but preferably, magnetic means for causing a vibrating magnetic field to act on the transfer path is disposed by packing the magnetic particles into the reaction vessel. For, stirring can thus be imparted to the solution inside the reaction vessel. The magnetic particles can be used also as the solid phase for fixing the immobilized antibody, and the like.

Though its structure is not particularly limitative, the B/F isolation mechanism is suitably of the type in most cases wherein the washing solution is dividedly poured from the jet nozzle into the reaction vessel and the solution is sucked and discharged by the suction nozzle.

An optical photometer, for example, which is disposed at the final stage of the reaction-measurement stage is to measure an enzyme or a fluorescent material when the label of the labeled antibody is the enzyme or the fluorescent material and a radioactive ray sensing type measuring instrument is used when a radioactive material is used as the label. A top-top type optical photometer is recommended so as to make the construction of the automatic immunoassay analyzer simple.

Generally, an electronic controller using a microprocessor is used in order to operate the analyzer of the present invention. This electronic controller can be constituted by use of known electronic circuit technique but in the case of the analyzer of the present invention, timing control is preferably made by a main computer, for example, and the operation of each mechanism is preferably controlled dividedly by a local microprocessor in accordance with a predetermined sequence program because mutual control information are not fundamentally necessary except that the intermittent drive control of the conveyor, the rest control of the sprockets at the suction stage and the control of various mechanisms at the reaction-measurement stage must be controlled at the associated timing between them. According to this system, the control of the common mechanisms is left unchanged and only the change portions are replaced or corrected so as to cope with any design change.

The control system necessary for the analyzer of the present invention typified as above can be provided by a definite sequence program assembled in advance in the local processor for operating the individual mechanisms and by setting of the timings for establishing the timing between the start timing of the operation of each mechanism based on the program and the intermittent driving of the conveyors. More definitely, it is possible to employ a system, for example, which holds the input information from the first read means (or the input device such as the ten-key described already) and from the second read means by a shift register and provides sequentially the operation timing of each mechanism by counting the operation of intermittent driving of the conveyors. The operation sequency of each mechanism can be provided by programming the operations given in the explanation described above.

The invention may be put into practice in various ways and a number of specific embodiments will be described by way of example to illustrate the invention with reference to the accompanying drawings, in which:
Figure 1 is an explanatory diagrammatic view useful for explaining the outline of the structure of an analyzer in accordance with one embodiment of the present invention;
Figure 2 is an explanatory view useful for explaining in detail the setting work of each container in a set stage A;
Figure 3 is an explanatory view useful for explaining the structure and movement of each container 2, 4 set in the set stage A of the analyzer while it is transferred to a suction stage B and a division-pouring stage D;
Figs. 4(a) - 4(d) are explanatory views useful for explaining sequentially the movement of each container;
Figs. 5(a) and 5(b) are perspective views of pipet devices used in the present invention, respectively.

### Description of the Preferred Embodiment:

Hereinafter, the present invention will be explained in detail with reference to preferred embodiments thereof shown in the accompanying drawings.

### Embodiment 1:

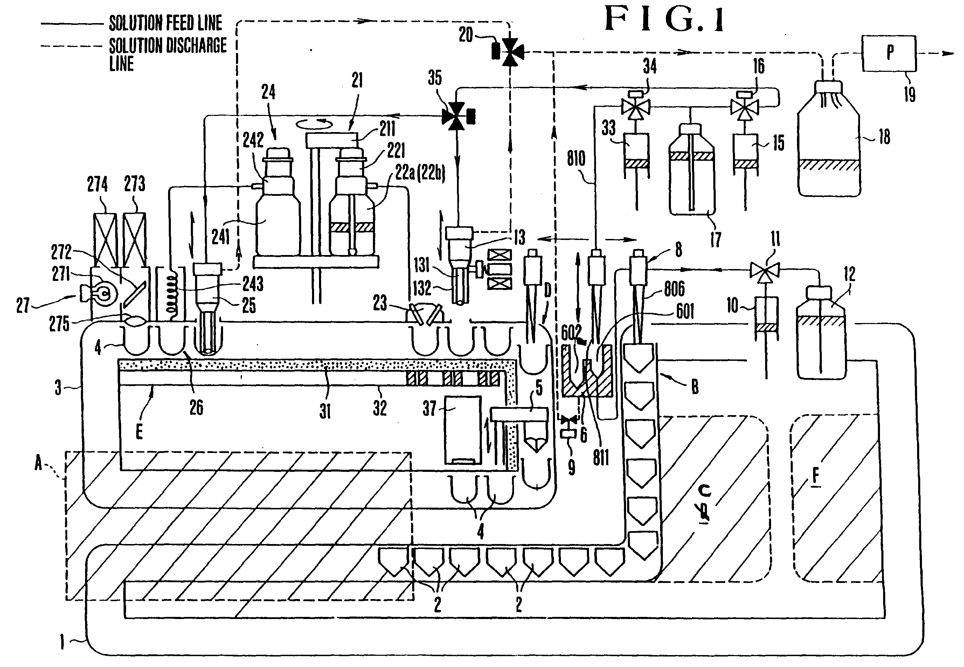

Figs. 1 to 4 show the embodiment wherein the present invention is applied to an immunoassay method (EIA) using an enzymic label of a two-step system. Accordingly, this embodiment uses reaction vessels into each of which a fixed antibody prepared by fixing an antibody to an solid phase (the solid phase being magnetic particles in this embodiment) is packed in advance. Though a fixed antibody such as described above is used for an antigen measurement, a fixed antigen may of course be used for an antibody measurement.

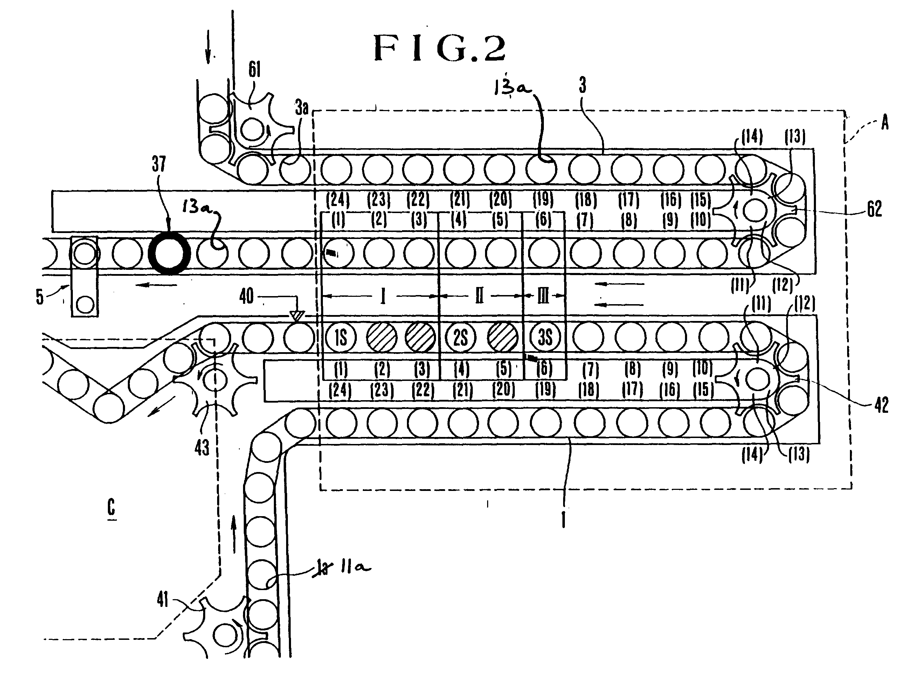

Figure 1 is a diagrammatic explanatory view which will be referred to in order to explain the outline of the structure of the analyzer of this embodiment. Reference numeral 1 represents a first conveyor (the specimen vessel transfer conveyor). This conveyor 1 has thereon a large number of openings (the support portions) 11a (see Figure 2) formed with predetermined gaps between them, and is arranged to be driven intermittently with a predetermined time interval t by a driving mechanism, (not shown in Figure 1), to travel along a closed loop path from a set stage or zone represented by the symbol A in the drawing and to return again to it having passed through a suction stage or zone B. The first conveyor 1 in this embodiment consists of an endless chain type conveyor capable of zigzag motion as will be explained later with reference to Figure 2 and is disposed in such a manner as to possess a stay or rest stage or zone C where it can stay or reside in a zigzag form between the set stage A and the suction stage B. The symbol F (see Figure 1) represents another stay or rest stage or zone which is disposed downstream of the suction stage B and at which the first conveyor can stay or reside in the zigzag form.

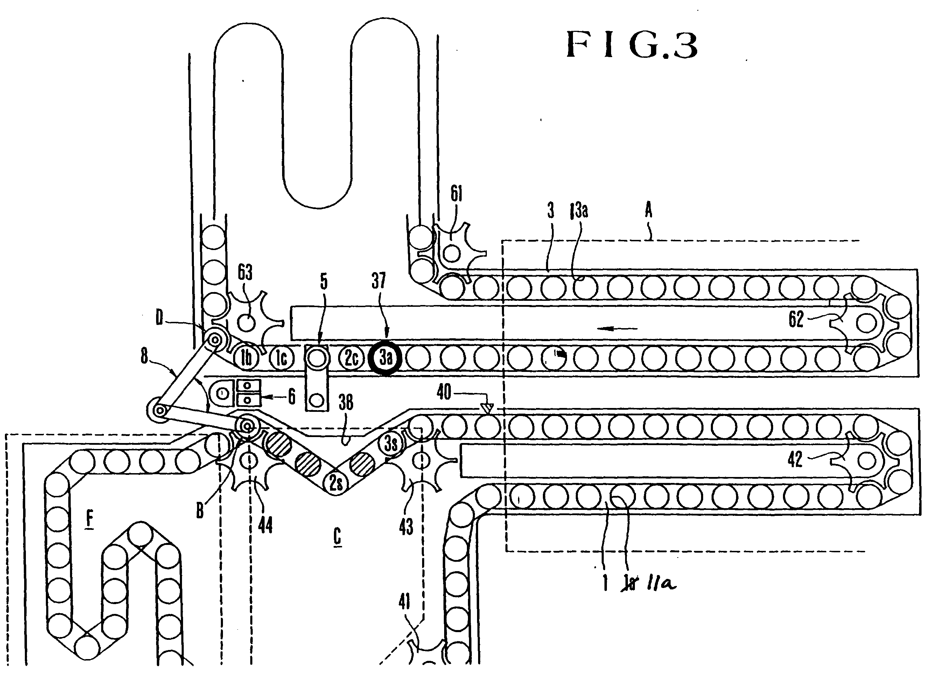

The large number of members 2, 2, 2 shown on the first conveyor 1 in Figure 1 are specimen vessels. (These are referred to as 1s, 2s; 3s in Figures 2, 3 and 4). Though the specimen vessels are shown as if supported one vessel in each opening 11a, 11a, 11a, ... (not shown in Figure 1) for the sake of convenience (but see Figure 2), they are in fact skippingly or intermittently fitted into and supported by the openings 11a, 11a, 11a, ... in practice so that empty openings 11a are left between adjacent vessels. This point and the reason for it will be explained in further detail with reference to Figure 3.

Reference numeral 3 represents a second conveyor (the reaction vessel transfer conveyor). The second conveyor 3 in this embodiment has the same structure as the first conveyor 1 described above and has a large number of openings 13a (not shown in Figure 1) (see Figure 2) formed with predetermined gaps between them in the transfer direction for supporting reaction vessels 4. (There are referred to as 1a, 1b, 1c, 2b, 2c, 3a in Figures 2, 3 and 4). This conveyor 3 is arranged to be driven intermittently by a driving mechanism (not shown in the drawing) with a predetermined time interval t so as to move along an endless closed loop path from the set stage or zone A back again to the set stage A via a division-pouring stage or zone D and then through a reaction-measurement stage or zone E where a incubator heater 31 is disposed. The second conveyor 3 in this embodiment, too, consists of an endless chain type capable of zigzag motion. Incidentally, the set stages of the first and second conveyors 1 and 3 are represented in common by the symbol A. The incubator heater 31 in this embodiment may be of such a type which is produced by bonding a sheet-like heat generator to the lower surface of a flat sheet which forms the transfer path, and a current is caused to flow through this heat generator so as to control the temperature to a predetermined temperature. According to such a structure, the thermostat mechanism can be constituted very easily.

In the construction described above, the suction stage B disposed for the first conveyor 1 and the division-pouring stage D disposed for the second conveyor 3 are arranged in proximity to each other so that the suction and division-pouring operations of the specimen can be carried out between them. Thus, a pipette device represented by reference numeral 8 functions as the division-pouring means and is arranged to be able to suck a suitable amount of specimen from the specimen vessel 2, which has been transferred to and stopped at the suction stage B by the conveyor 1, and to pour it dividedly, i.e. in portions, into reaction vessels 4 located in the division-pouring stage D along the path of the conveyor 3.

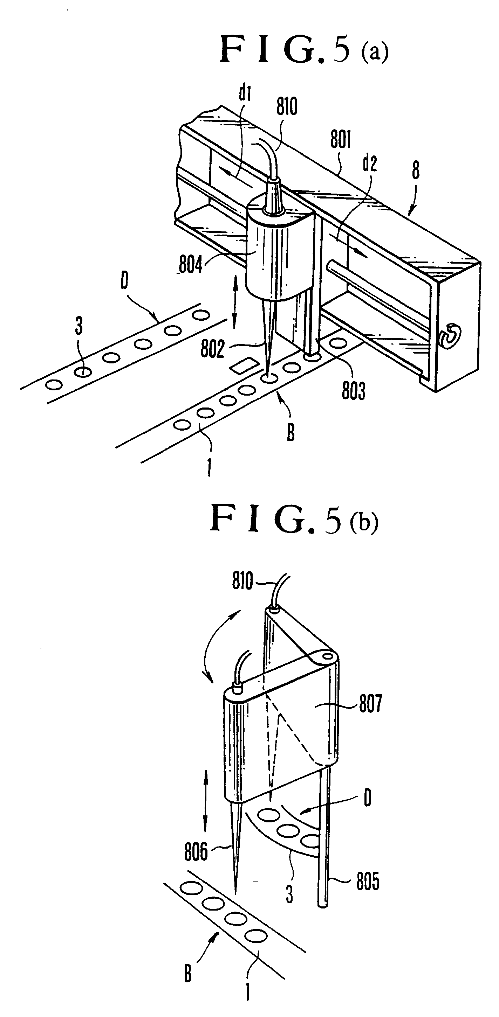

Devices having structures such as shown in Figures 5(a) and 5(b) can be used as the pipette device 8, for example. In the device structure shown in Figure 5(a), a holder 804 which is integral with a pipette nozzle 802 is supported by a horizontal slide rack-801 in such a manner as to be slidable horizontally in a d₁ - d₂ direction and is further supported by a vertical slide rack 803 in such a manner as to be slidable vertically. In the structure of the pipette device shown in Figure 5(b), a holder 807 which is integral with a pipette nozzle 806 is supported at the upper end of a vertical shaft 805 capable of moving up and down and also capable of rotating around an axis so that the pipette nozzle 806 can suck and pour dividedly, i.e. in portions, the specimen due to the vertical motion and rotation of this vertical shaft 805.

Turning back again to Figure 1, the pipette nozzle 802 (or 806) of this pipette device is connected to a cylinder pump 33 for sucking and discharging a solution through a flexible tube 810 and this cylinder pump 33 is connected to a washing solution tank 17 of the pipette nozzle through a three-way electromagnetic valve 34 so that the nozzle can be washed by supplying and jetting the washing solution to the nozzle after completion of the suction and divided pouring of the specimen.

A diluted solution port 6 is disposed between the suction stage 8 and the division-pouring stage D where the pipette device moves, and a suitable amount of a diluted solution can be supplied to a diluted solution well 601 of this diluted solution port 6 from a diluted solution reservoir 12. Reference numeral 10 represents a cylinder pump for supplying the diluted solution and 11 is a three-way electromagnetic valve. Reference numeral 602 represents a waste liquor portion of the diluted solution port, which discharges the diluted solution flowing out from the diluted solution reservoir 601 in the overflow system to a waste liquor tank 18. The tip portion of the pipette nozzle 802 (or 806) can be washed by causing the diluted solution to flow in the overflow system while the pipette nozzle 802 (or 806) is being dipped into the diluted solution well 601. Reference numeral 19 represents an exhaust pump for causing solution suction force to act on the waste liquor tank 18 and reference numeral 9 represents an electromagnetic valve disposed in the waste liquor path.

The operations of the division-pouring means inclusive of the pipette device having the structure described above are executed by the instruction of a local microprocessor (not shown) to which a sequence program for a series of operations is set in advance. In other words, when the corresponding specimen vessels 2 and reaction vessels 4 are stopped at the respective suction stage B and division-pouring stage D by the intermittent movement of the first and second conveyors, the operation of the division-pouring means is started from instructions contained in and delivered from a main computer not shown in the drawing. The following operations a - d are repeatedly carried out whenever a specimen is dividedly poured:
a. The pipette nozzle 802 (or 806) is lowered into the diluted solution reservoir 601 of the diluted solution port 6 and sucks the diluted solution.
b. Next, the pipette nozzle 802 (or 806) is moved to the suction stage B and sucks the specimen from the specimen vessel 2.
c. The pipette nozzle 802 (or 806) is moved to the division-pouring stage D, where it charges dividedly the sucked solution (the specimen and the diluted solution) into the reaction vessels 4.
d. The pipette nozzle 802 (or 806) is moved to the waste liquor portion 602 of the diluted solution port 6 and is washed by causing the washing solution from the washing solution tank 17 to flow.

Incidentally, a level sensor 811 is disposed along the pipette nozzle 802 (or 806) and can detect a signal for controlling the vertical motion of the pipette nozzle 802.

Reference numeral 5 represents a seal-break mechanism disposed upstream of the division-pouring stage D of the second conveyor 3. It is used when a cup-type reaction vessel whose upper surface opening is sealed by an aluminum foil, for example, is used. More definitely, a mechanism which breaks the foil by moving up and down a rod-like member having a wedge-shaped sharp lower end is preferably employed.

The reaction vessel 4 into which the specimen is dividedly charged is next transferred to the reaction-measurement stage E by the intermittent movement of the second conveyor 3 and incubation is effected for a predetermined time under the condition given by the incubator mechanism 31. In the incubation mechanism of this embodiment, an oscillating magnetic field produced by a magnetic plate 32 is caused to act on the reaction vessel together with the temperature control by the thermostat mechanism described above. The magnetic plate 32 in this embodiment can be of the type wherein permanent magnets are fixed to a bar extending to the right and left in Fig. 1 with predetermined gaps between them and this bar is reciprocated to the right and left with a predetermined amplitude. In this manner, the vibrating magnetic field is caused to act on the magnetic particles (not shown) which are preferably used as the solid phase to which the fixing antibody, which is packed into the reaction vessel, is coupled and the solution inside the reaction vessel can thus be stirred.

After incubation has been carried out for the predetermined period, the reaction vessel 4 is then placed at the first B/F isolation mechanism 13 where the reaction residues, and the like, are removed. Incidentally, the portion between the division-pouring stage D and the first B/F isolation mechanism 13 is shown as a short transfer path in Fig. 1, but the length of this transfer path can of course be set to a suitable length in accordance with the time necessary for incubation.

In this first B/F isolation mechanism 13, a B/F probe has a double pipe structure and is arranged to be able to move up and down, the washing solution is supplied into its center inner pipe 131 and suction force is caused to act from between the inner pipe 131 and its outer pipe 132 so as to suck and discharge the solution inside the reaction vessel. The inner pipe 131 is connected to the washing solution tank 17 through three-way electromagnetic valves 35, 16 so that the washing solution can be supplied from the tank 17 by the cylinder pump 15. The outer pipe 132 is connected to the waste liquor tank 18 through a three-way electromagnetic valve 20. Incidentally, the probe of the B/F isolation mechanism need not particularly be limited to the double pipe structure described above but may be of any type wherein a solution feed pipe and a solution discharge pipe are fitted into the reaction vessel in parallel with each other, for example.

Next, the reaction vessel 4 is transferred to a reagent division-pouring position 23 and a predetermined reagent, which is designed in accordance with each measuring analyte of the reaction vessel, is charged dividedly from the reagent division-pouring mechanism 21. The reagent division-pouring mechanism 21 of this embodiment has the following structure, for example. A plurality of reagent tanks 22a, 22b, ... are arranged on a predetermined concentric circle and each reagent tank is equipped with a manual push type pump 221 so that a lever 211 capable of selecting its position by the rotation system can feed the solution when it is moved down. The selection of the reagents by the rotation of this lever 211 and the timing of its downward movement are selected in accordance with the sequence program set in advance to the local microprocessor (not shown) in accordance with the content of the measurement analyte which is read by a later-appearing second reader and with the operation signal of the intermittent rotation of the first conveyor.

The lever 211 of the reagent division-pouring mechanism in this embodiment is used also as the operation portion of a later-appearing substrate division-pouring mechanism 24.

In the reaction vessel 4, therefore, the immunological reaction takes place between the fixed antibody coupled to the surface of the magnetic particles which are packed in advance into the reaction vessel, the antigen contained in the specimen (the substance as the object of measurement and inspection) and the labeled (enzyme) antibody in the reagent added to the reaction vessel, and a composite member of the fixed antibody - the antigen - the labeled antibody is formed.

Next, the reaction vessel 4 is transferred to the position of the second B/F isolation mechanism 25, where the reaction residues, and the like, are removed. This second B/F isolation mechanism 25 may have exactly the same structure as that of the first B/F isolation mechanism 13 described already.

Next, the substrate is dividedly charged into the reaction vessel 4 by the substrate division-pouring mechanism 24 at the substrate division-pouring position. This substrate division-pouring mechanism 24 supplies the substrate into the reaction vessel through a thermostat portion 243 consisting of a coil-like pipe by the pump 242 of the manual push type which is operated by the lever 211 from the substrate tank 241 as described above. The thermostat portion 243 consisting of the coil-like pipe is constituted, for example, by passing a heating wire (not shown) through the center of the coil-like pipe so as to control the temperature of the substrate to be charged dividedly by temperature control means not shown in the drawing. The substrate may be single if the kind of enzyme used as the label is only one, but when different kinds of enzymes are used, a plurality of substrate tanks 241 (each having integrally the pump 242) and storing therein the different substrates may be disposed on the same concentric circle as that of the tanks of the reagent division-pouring mechanism described already.

The reaction vessel 4 into which the substrate is dividedly charged in this manner is then transferred to a fluorescent measurement position so as to measure the fluorescence emitted from the substrate by a photometer 27. This photometer 27 comprises, for example, a cold cathode discharge tube 271, a dichromic mirror 272, a signal detector 273, a reference detector 274, a lens 275, and the like.

In this manner the optical change generated by the reaction between the labelling enzyme (whose quantity is in proportion to the amount of the antigen contained in the specimen) coupled to the fixed antibody inside the reaction vessel and the substrate is measured, and this photometric data is inputted to the main computer, not shown in the drawing, to calculate the concentration of the intended object matter.

This calculation value is stored in a storage or outputted as hard copy data by output means such as a printer, whenever necessary. In this case, read data of later-appearing first and second readers may of course be recorded or outputted as the display analytes of the measurement value.

After this photometry is complete, the reaction vessel is returned to the set stage A with the rotation of the conveyor but generally, it is advisable to discharge it outside the analyzer by disposing a vessel discharging mechanism, not shown in the drawing, at an intermediate portion of this return transfer path. This vessel discharge mechanism is preferably disposed for the specimen vessels on the first conveyor 1 in the same way.

The explanation given above explains the outline of the structure of the immunoassay analyzer of the present invention and the outline of its operation. Next, the detail structure and operation of each portion will be explained in further detail with reference to Fig. 2 et seq.

Fig. 2 is an explanatory view which is useful for explaining in detail the setting work of each vessel at the set stage or zone A, and Fig. 3 is an explanatory view which is useful for explaining the structure and movement of each of the vessels 2 and 3, which are set at the set stage A, while they are transferred respectivelv to the suction stage B and to the division-pouring stage D.

In Fig. 2, when the endlessly rotating closed loop first conveyor 1 rotates and returns to the set stage A in this embodiment, its openings 11a, 11a, 11a, ... are empty, and describes a U-shape after turning back at the intermediate point of the transfer path having a predetermined length at the set stage A as shown in the drawing. In the U-shaped transfer path inside this set stage A, the numbers from No. (1) to No. (24) are sequentially put to each opening 11a with the position on the upstream side of the transfer path which is close to the suction stage B as the reference point No. (1).

Similarly, when the endlessly rotating second conveyor 3 rotates and returns to the set stage A in this embodiment, its openings 13a, 13a, 13a ... are empty, and the transfer path is disposed in the U-shape in the same way as in the first conveyor. The display numbers (1) to (24) are likewise put along the transfer path with the position on the upstream side of transfer close to the division-pouring stage D being the reference point No. (1).

As an illustrative example vessels are fitted into openings of these conveyors 1, 3 in the following manner in the case when the first specimen has the three measurement analytes (a, b, c), the second specimen has two measurement analytes (b, c) and the third specimen has one measurement analyte (a) are set, respectively.

The specimen vessel for the first specimen is represented as 1S meaning the first specimen, and the specimen vessels for the second and third specimens are likewise represented by 2S, 3S, and so forth. The vessel for the first specimen 1S is fitted and set to the opening at the reference point No. (1) of the set stage A of the first conveyor 1. Since this specimen has three measurement analytes, the openings 11a numbered (2) and (3) are left empty.
Incidentally, the empty openings 11a are represented by oblique lines in the drawing for the purpose of clarification.

Next, the specimen vessel 2S is fitted to the opening 11a numbered (4) and the opening No. (5) is left empty. The specimen vessel 3S is fitted into the opening No. (6). (Since this specimen has only one analyte the next specimen would be put in the opening at position No. 7).

In this manner, open zones I, II and III are defined on the first conveyor 1 depending on the numbers of measurement analytes (3, 2, 1 in this embodiment) as shown in the drawing and each corresponding specimen vessel is fitted into the leading opening of each open zone.

On the other hand, the reaction vessel having the analyte 1a, the reaction vessel having the analyte 1b, the reaction vessel having the analyte 1c, the reaction vessel having the analyte 2a, the reaction vessel having the analyte 2b and the reaction vessel having the analyte 3a are sequentially fitted to the openings 13a numbered (1), (2), (3), (4), (5) and (6) of the second conveyor 3, respectively and sequentially.

Each reaction vessel is fitted into each opening for each subsequent specimen No. (4) et seq in the same way whenever necessary.

After the vessels have been fitted into the conveyors, the apparatus is started by pushing an inspection start button not shown in the drawing. In this manner each conveyor is moved and transferred intermittently one opening by one in the direction represented by the arrows in the drawing. Driving means for causing the intermittent rotation of the conveyors in this embodiment comprises drive wheels with sprockets 41,42,43,61,62 which are disposed at predetermined positions and engage the conveyors. Since the distance of intermittent rotation of each sprocket is set to be the same, both conveyors are fed in synchronism with each other from the set stage A so that the specimen vessel 2S and the reaction vessel 2a are positioned at the reference point No. (1) when the third intermittent rotation is complete, for example.

In this embodiment, at the position where one specimen vessel is fed out from the set stage A of the first conveyor, the passage of the vessel 2 and the number of empty openings which subsequently pass before the next vessels are counted by a counter 40. In this case, when the specimen vessel 1S first passes by, the counter 40 counts the passage and counts up by one, and then counts up two empty openings subsequent to the former. In other words, the counter 40 counts three in total for the first specimen. Next, when the passage of the second specimen vessel 2S at this position is detected, the count is updated by confirming the end of the passage of the open zone for the first specimen and at the same time, the next specimen vessel (that is, the specimen vessel 2S) and the number of empty openings till the passage of the next specimen vessel are likewise counted. (In this embodiment, since the number of the empty opening is one in this case, the total number of counts is 2.) The count number detected by this counter 40 is utilized as the data for controlling the stop and holding of the specimen vessels in the suction stage B which will be explained next.

In the suction stage B (see Figure 3), the sprocket 44 is disposed in this embodiment in order to accept - stop - deliver the specimen vessels 2 in the suction stage B as shown in Figure 3. This sprocket 44 is controlled in the following manner, for example, by the local microprocessor not shown in the drawing.

The state shown in Figure 3 represents the case where the first specimen vessel 1S is transferred into the suction stage B. At this time the leading reaction vessel 1a is transferred to and stops at the division-pouring stage D of the second conveyor 3. Under this state, the specimen in the specimen vessel 1S is sucked by the pipette device 8 and dividedly poured or transferred into the reaction vessel 1a, that is a portion of given volume is discharged into the reaction vessel 1a. In this instance, the specimen in the specimen vessel 1S must also be poured dividedly, i.e. in an equal volume into each of the reaction vessels 1b and 1c for the measurement of the remaining two measurement analytes. The sprocket 44 is kept stationary for the period necessary for this divided pouring operation so that this specimen vessel 1S is stopped and held at the suction stage B. In the meantime, the reaction vessels 1b and 1c are sequentially transferred into and stopped at the division-pouring stage due to the intermittent driving of the conveyor 3 and the reaction vessel 1c is fed out from the division-pouring stage B during the next intermittent rotation. (This corresponds to the time of transfer of the next reaction vessel 2b into the division-pouring stage D.)

During the period when the sprocket 44 was stationary, too, the intermittent rotation of the first conveyor 1 proceeds at other portions. Therefore, in order to prevent any trouble in the rotation of the conveyor 1 in this case, a stay region or zone C, where the conveyor 1 can stay in a zigzag form, is defined in this embodiment between the sprocket 43 and the sprocket 44. A guide wall 38 having a swell shown in Figure 3 is provided in this stay region C in such a manner as to define the transfer path of the conveyor 1 and encourage the adoption of a bent or zigzag configuration when the sprocket 44 is stationary thus avoiding any problems due to so-called "clogging" of the conveyor.

The pipette dips into the dilute solution well 601, dips into the vessel 1S, sucks liquid up from the vessel 1S, rotates to above the reaction vessel 1a, discharges a measured volume into the vessel 1a, dips into the well 601 and repeats the cycle for the vessel 1b and then 1C.

Next, when specimen suction of the specimen vessel 1S is complete (thrice in total), the next specimen vessel 2S must be transferred into and stopped at the suction stage B for the purpose of the next suction. However, two empty openings exist between the first specimen vessel 1S and the next second specimen vessel 2S as shown in Figure 3. Therefore, if the sprocket 44 is merely rotated intermittently one step at a time, empty openings will naturally stop at the suction location and the necessary specimen cannot be poured dividedly or transferred into the reaction vessel 2b which is transferred into and stopped at the division-pouring stage. In this case, therefore, the sprocket 44 is rotated continuously for the period corresponding to its stop period so that the next specimen vessel 2S is transferred to the suction stage B during the next intermittent rotation. Such a control can be made by a predetermined program using the signal from the counter 40 as the data.

After the reaction vessel 3 is fed out from the set stage A by the second conveyor 3, a second reader 37 using a video camera, a bar code reader, or the like, reads the data relating to the predetermined measurement analytes, upstream of the division-pouring stage for this reaction vessel in this embodiment. This read data are used as the data for determining the operation of each mechanism at the reaction-measurement stage E at the post-stage, as described already.

The reference numeral 5 in Fig. 3 represents the seal break mechanism and reference numeral 6 represents the diluted solution port.

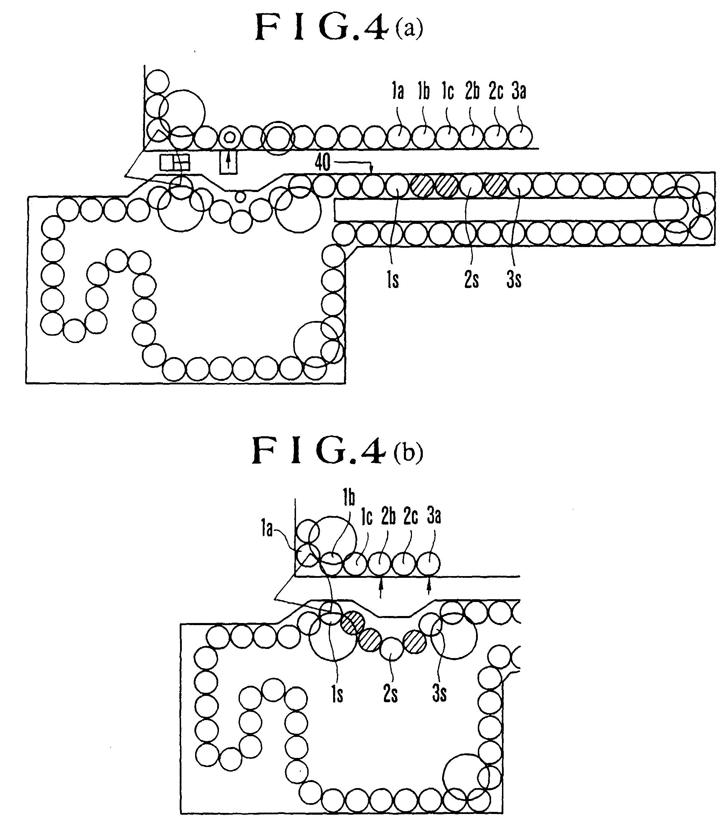

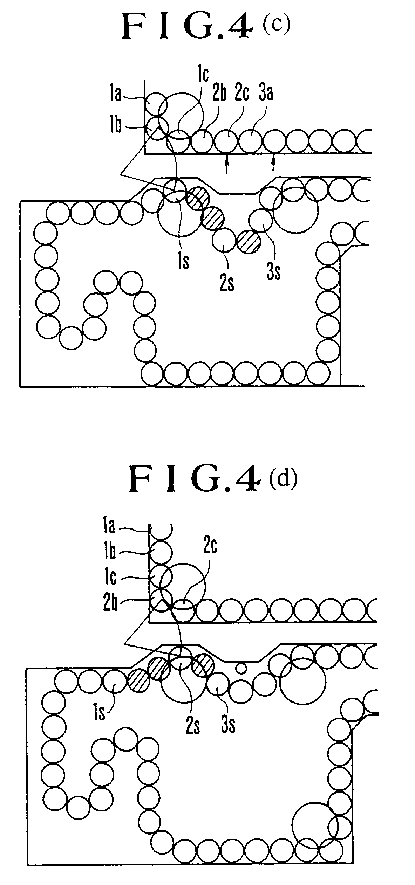

Figs. 4(a) - 4(d) show easily and comprehensively the relationship of the movements of the specimen vessels and the reaction vessels described above. Fig. 4(a) shows the state where the specimen vessels and the reaction vessels are set in the set stage A, Figs. 4(b) and 4(c) show that the specimen vessel 1S is stopped at the suction stage B even when the reaction vessels 1b and 1c are transferred into and stopped at the division-pouring stage and Fig. 4(d) shows the state where the second specimen vessel 2S is held even when the reaction vessel 2b is transferred into and stopped at the division-pouring stage D.

### Embodiment 2:

This embodiment explains the case where 1-step system EIA is carried out. In this case, a reaction vessel into which the fixed antibody fixed to the solid phase and the labeled antibody labeled by an enzyme are charged in advance is used.

As the analyzer to be used in this embodiment, the analyzer explained with reference to Figs. 1 to 3 can be used as such or an analyzer obtained by omitting the B/F isolation mechanism represented by reference numeral 13 in Fig. 1 can be used, instead. In this analyzer, the immunological reaction for forming the composite body comprising the combination of the fixed antibody - the antigen - the labeled antibody proceeds at the division-pouring stage D inside the reaction vessel into which the specimen is poured dividedly, while the reaction vessel is being transferred through the transfer path in the same way as in Embodiment 1. This vessel is transferred to the position of the B/F isolation mechanism represented by reference numeral 25 and the removal of the reaction residue and the like is effected in the same way as in Embodiment 1. Thereafter the amount of the antigen in the specimen is quantitatively determined in the sequence of divided pouring of the substrate and photometry in the same way as in Embodiment 1.

As can be understood from the explanation given above, the fundamental structure of the analyzer of the present invention can be designed in common as both a 1-step system analyzer and a 2-step system analyzer (with the proviso that unnecessary mechanisms are kept stationary or omitted) and can also be constituted as the analyzer capable of selecting from either of both these systems, whenever necessary.

### Embodiment 3:

As described above, the analyzer of the present invention can easily cope with a large number of specimens having variously different measurement analytes, can measure them easily and rapidly, and has an excellent structure suitable for random access. Moreover, the analyzer of the invention provides another advantage in that the addition of specimens can be made easily after the measurement operation by the analyzer is started.

The analyzer of the present invention provides the effect that the manual work necessary for the measurement can be completed by merely putting the specimen vessels into which the specimens are charged and the reaction vessels having different contents for the measurement analytes for the immunological reaction on the conveyor, and makes the operation extremely easy with reduced risk of mistakes in operation.

Furthermore, the analyzer of the present invention has high design freedom such that the analyzer can cope with the analysis of a relatively small number of specimens to be processed as well as of a large number of specimens while keeping in common the fundamental structure of the analyzer, by merely changing the length of the conveyor.

## Claims

1. Apparatus for automatic analysis of a plurality of specimens by reaction with one or more other materials, at least some of which specimens have a number of measurement analytes (properties requiring different reactions for analysis) comprising a first or specimen vessel transfer conveyor (1) arranged as a closed loop and provided with a plurality of specimen vessel support positions (1a) and drive means (41,42,43,44) for the said first conveyor, the closed loop passing from a specimen vessel loading zone or first set stage (A) to a specimen sampling and transfer zone or suction stage (B) and back to the first set stage (A); a second or reaction vessel transfer conveyor (3) arranged as a closed loop and provided with a plurality of reaction vessel support positions (13a) and drive means (61,62,63) for the said second conveyor (3), the closed loop passing from a reaction vessel loading zone or second stage (A) to a specimen transfer zone or division-pouring stage (D) in which zone means (8) are provided for withdrawing one or more samples from a specimen vessel (1S, 2S, 3S) and transferring them separately to each of a corresponding number of one or more reaction vessels (1a,1b,1c,2b,2c,3a) the conveyor closed loop then passing to a reaction measurement zone (E) and then back to the second set stage (A), characterised in that adjacent specimen vessel support positions (11a) and adjacent reaction vessel support positions (13a) are separated by the same distance and the specimen vessels are spaced from each other by 'n-1' support positions where 'n' is the number of measurement analytes for the specimen in question which is to be analysed, the specimen being placed downstream of the n-1 empty positions and n reaction vessels are provided in the second conveyor, the conveyors being arranged so that the support positions in the two conveyors (1,3) move in sequence with each other and are placed in proximity with each other in the specimen transfer zone (B), and in that one or both of the conveyors is provided with means (38) for enabling it to adopt a non-linear configuration or zigzag path whereby the conveyor can be halted at one position but continue to be moved upstream thereof, and in that each conveyor is provided with means for causing it to move step by step, each step being the movement between adjacent support positions and the step by step movement being continuous or intermittent.

2. Apparatus as claimed in claim 1 characterised in that means (44) are provided for holding a specimen vessel (1) in a single location in the specimen transfer zone (B) while its associated reaction vessels are brought sequentially into proximity with it and samples of the specimen transferred to the said reaction vessels (3), whilst permitting the upstream portion of the specimen transfer conveyor (1) to continue step by step movement.

3. Apparatus as claimed in claim 1 or claim 2 characterised in that counter means (40) are provided for counting the number of empty specimen vessel support means downstream of each occupied specimen vessel support means and thus the number of measurement analytes of each specimen vessel and the signal therefrom is used to control the movement of the two conveyors (1,3) and the means (44) for holding a specimen vessel in a single location.

## Patentansprüche

1. Vorrichtung zur automatischen Analyse von mehreren Proben durch Reaktion mit einem oder mehreren anderen Materialien, von denen mindestens einige Proben eine Anzahl von Meßanalyten (Eigenschaften, die verschiedene Reaktionen zur Analyse erfordern) aufweisen, mit: einer ersten oder Probengefäßübertragungsfördereinrichtung (1), die wie eine geschlossene Schleife angeordnet ist und mit mehreren Probengefäßhalterungsstellen (1a) und Antriebseinrichtungen (41,42,43,44) für die erste Fördereinrichtung versehen ist, wobei die geschlossene Schleife von einer Probengefäßladezone oder ersten Einsetzstufe (A) zu einer Probenentnahme- und Übertragungszone oder Ansaugstufe (B) und zurück zu der ersten Einsetzstufe (A) geht; einer zweiten oder Reaktionsgefäßübertragungsfördereinrichtung (3), die wie eine geschlossene Schleife angeordnet ist und mit mehreren Reaktionsgefäßhalterungstellen (13a) und Antriebseinrichtungen (61,62,63) für die zweite Fördereinrichtung (3) versehen ist, wobei die geschlossene Schleife von einer Reaktionsgefäßladezone oder zweiten Stufe (A) zu einer Probenübertragungszone oder Abteilungsgießstufe (D) geht, in welcher Zone Einrichtungen (8) zum Einziehen einer oder mehrerer Stichproben aus einem Progengefäß (15,25,35) und zu ihrem getrennten Übertragen zu jedem einer entsprechenden Anzahl von einem oder mehreren Reaktionsgefäßen (1a,1b,1c,2b,2c,3a) vorgesehen sind, wobei die Fördereinrichtung dann zu einer Reaktionsmessungszone (E) und dann zurück zu der zweiten Einsetzstufe (A) geht, dadurch gekennzeichnet, daß benachbarte Probengefäßhalterungsstellen (11a) und benachbarte Reaktionsgefäßhalterungsstellen (13a) durch denselben Abstand getrennt sind und die Probengefäße voneinander durch 'n-1' Halterungsstellen beabstandet sind, wobei 'n' die Anzahl der Meßanalyten für die fragliche Probe ist, die zu analysieren ist, wobei die Probe stromabwärts um die n-1 leeren Stellen angeordnet ist, und n Reaktionsgefäße in der zweiten Fördereinrichtung vorgesehen sind, wobei die Fördereinrichtungen so angeordnet sind, daß die Halterungsstellen in den beiden Fördereinrichtungen (1,3) sich in Abfolge zueinander bewegen und in der Probenübertragungszone (B) nahe zueinander angeordnet sind, und daß eine oder beide Fördereinrichtungen mit Einrichtungen (38) zum Ermöglichen, daß sie eine nichtlineare Anordnung oder Zickzackweg annehmen, versehen sind, wodurch die Fördereinrichtung an einer Stelle angehalten werden kann, jedoch weiter stromaufwärts davon bewegt wird, und daß jede Fördereinrichtung mit Einrichtungen zum Bewirken, daß sie sich schrittweise bewegt, versehen ist, wobei jeder Schritt die Bewegung zwischen zwei benachbarten Halterungsstellen ist und die schrittweise Bewegung kontinuierlich oder mit Unterbrechungen stattfindet.

2. Vorrichtung nach Anspruch 1, dadurch gekennzeichnet, daß Einrichtungen (44) zum Halten eines Probengefäßes (1) an einem einzigen Platz in der Probenübertragungszone (B) vorgesehen sind, während seine zugeordneten Reaktionsgefäße aufeinanderfolgend in die Nähe zu ihm gebracht werden und Stichproben der Probe zu den Reaktionsgefäßen (3) übertragen werden, während es gestattet wird, daß der stromaufwärts gelegene Abschnitt (1) mit der schrittweisen Bewegung fortfährt.

3. Vorrichtung nach Anspruch 1 oder 2, dadurch gekennzeichnet, daß Zähleinrichtungen (40) zum Zählen der Anzahl der leeren Probengefäßhalterungseinrichtungen stromabwärts von jeder besetzten Probengefäßhalterungseinrichtung und folglich der Anzahl der Meßanalyten jedes Probengefäßes vorgesehen sind, und das Signal davon benutzt wird, um die Bewegung der beiden Fördereinrichtungen (1,3) und der Einrichtungen (44) zum Halten eines Probengefäßes an einem einzigen Platz zu steuern.

## Revendications

1. Appareil pour l'analyse automatique de plusieurs prélèvements par réaction avec une ou plusieurs autres matières, au moins certains desdits prélèvements possédant plusieurs analytes de mesure (propriétés nécessitant des réactions différentes à des fins d'analyse), comprenant un premier transporteur (1) ou un transporteur utilisé pour le transfert des récipients de prélèvements, arrangé en boucle fermée et muni de plusieurs positions de support (1a) pour les récipients de prélèvements et de moyens d'entraînement (41, 42, 43, 44) pour ledit premier transporteur, la boucle fermée passant d'une zone de chargement de récipients de prélèvements ou d'une première étape de réglage (A) à une zone d'échantillonnage et de transfert des prélèvements ou à une étape d'aspiration (B) et en retournant à la première étape de réglage (A); un second transporteur (3) ou un transporteur utilisé pour le transfert des récipients de réaction, arrangé en boucle fermée et muni de plusieurs positions de support (13a) pour les récipients de réaction et de moyens d'entraînement (61, 62, 63) pour ledit second transporteur (3), la boucle fermée passant d'une zone de chargement de récipients de réaction ou d'une seconde étape (A) à une zone de transfert de prélèvements ou à une étape de répartition-versement (D), zone dans laquelle on prévoit des moyens (8) pour retirer un ou plusieurs échantillons d'un récipient de prélèvements (1S, 2S, 3S) et pour les transférer respectivement à un nombre correspondant de récipients parmi un ou plusieurs récipients de réaction (1a, 1b, 1c, 2b, 2c, 3a), la boucle fermée du transporteur passant ensuite à une zone de mesure (E) de la réaction, puis en retournant à la seconde étape de réglage (A), caractérisé en ce que des positions de support adjacentes (11a) pour les récipients de prélèvements et des positions de support adjacentes (13a) pour les récipients de réaction sont séparées par la même distance, les récipients de prélèvements étant espacés l'un de l'autre par "n-1" positions de support où "n" représente le nombre d'analytes de mesure pour le prélèvement en question qui doit être analysé, le prélèvement étant placé en aval de n-1 positions vides, et on prévoit n récipients de réaction dans le second transporteur, les transporteurs étant arrangés de telle sorte que les positions de support dans les deux transporteurs (1, 3) se déplacent de manière mutuellement successives et sont placées à proximité l'une de l'autre dans la zone de transfert de prélèvements (B), et en ce qu'un des transporteurs ou les deux est ou sont munis de moyens (38) pour leur permettre de suivre une voie en zigzag ou de configuration non linéaire de telle sorte que le transporteur peut être arrêté à une position tout en poursuivant son mouvement en amont, et en ce que chaque transporteur est muni de moyens lui permettant de se déplacer pas-à-pas, chaque pas représentant le mouvement entre des positions de support adjacentes et le mouvement pas-à-pas étant réalisé en continu ou par intermittence.

2. Appareil selon la revendication 1, caractérisé en ce qu'on prévoit des moyens (44) pour retenir un récipient de prélèvement (1) dans une seule position dans la zone de transfert de prélèvements (B), tandis que ses récipients de réaction associés sont amenés successivement à sa proximité, des échantillons des prélèvements étant transférés auxdits récipients de réaction (3), tout en permettant à la portion en amont du transporteur de transfert de prélèvements (1) de poursuivre son mouvement pas-à-pas.

3. Appareil selon la revendication 1 ou 2, caractérisé en ce qu'on prévoit un moyen de comptage (40) pour compter le nombre de moyens de support de récipients de prélèvements vides en aval de chaque moyen de support de récipients de prélèvements occupé et ainsi, le nombre d'analytes de mesure de chaque récipient de prélèvement, dont on utilise le signal pour régler le mouvement des deux transporteurs (1, 3) et du moyen (44) pour retenir un récipient de prélèvement dans une seule position.
